# EUROPÄISCHE PATENTSCHRIFT

(11) **EP 3 063 867 B1**
(45) Veröffentlichungstag und Bekanntmachung des Hinweises auf die Patenterteilung: **15.09.2021**
(21) Anmeldenummer: 14786804.6
(22) Anmeldetag: 20.10.2014
(51) Int. Cl.: H02P 3/04, H02P 27/16, H04B 3/54, H02H 7/08

(54) **ANTRIEBSSYSTEM**
DRIVE SYSTEM
SYSTÈME D'ENTRAÎNEMENT

(30) Priorität: 31.10.2013 DE 102013018271
(43) Veröffentlichungstag der Anmeldung: 07.09.2016
(73) Patentinhaber: SEW-EURODRIVE GmbH & Co. KG, 76646 Bruchsal (DE)
(72) Erfinder: SCHMIDT, Josef, 76676 Graben-Neudorf (DE); GEISSLER, Michael, 76709 Kronau (DE); SLISKOVIC, Maja, 76275 Ettlingen (DE); GROß, Dieter, 68753 Waghäusel (DE); BÖCKLE Jürgen, 76646 Bruchsal (DE)
(86) Internationale Anmeldenummer: PCT/EP2014/002821
(87) Internationale Veröffentlichungsnummer: WO 2015/062708

(56) Entgegenhaltungen:
- DE-A1- 10 014 183
- DE-A1-102009 013 311
- DE-A1-102011 100 361
- DE-A1-102011 109 537
- US-A1- 2002 039 010
- None

## Beschreibung

Die Erfindung betrifft ein Antriebssystem mit einem umrichtergespeisten Elektromotor.

Aus der DE 10 2009 013 311 A1 ist als nächstliegender Stand der Technik eine Antriebsvorrichtung für eine Windturbine bekannt, wobei die Antriebsvorrichtung einen Umrichter und einen über Versorgungsleitungen aus den Umrichter gespeisten Motor aufweist, wobei am Motor eine elektromagnetisch betätigbare Bremse angeordnet ist, welche aus dem Umrichter gespeist wird.

Aus der US 2002/0039010 A1 ist ein Materialhandlingsystem bekannt, wobei ein bremsseitiger AC/DC-Wandler offenbart wird, der mit Wechselspannung aus der Signalelektronik des Umrichters gespeist wird.

Aus der DE 10 2011 100 361 A1 ist ein Antriebssystem bekannt, wobei Leitungen und Versorgungsleitungen in einem gemeinsamen Kabel angeordnet sind. Außerdem wird auch die gemeinsame Anordnung von Signalelektronik mit weiteren Sensoren offenbart.

Aus der DE 100 14 183 A1 ist ein elektrischer Motor bekannt, wobei Datenkopplungsmittel zum Aufmodulieren und Demodulieren von Signalen auf Versorgungsleitungen sowie die Verbindung des Datenkopplungsmittels mit einer Signalelektronik, die am Motor integriert angeordnet ist, offenbart werden.

Aus der DE 10 2011 109 537 A1 ist ein Umrichtersystem mit Überwachungseinrichtung bekannt, wobei ein STO-Detektor zur Sicherheit gegenüber Drahtbruch offenbart wird.

Der Erfindung liegt daher die Aufgabe zugrunde, eine Vorrichtung weiterzubilden, wobei eine sichere und störungsfreie Bremsversorgung gewährleistbar sein soll.

Erfindungsgemäß wird die Aufgabe durch ein Antriebssystem nach den in Anspruch 1 angegebenen Merkmalen gelöst.

Wichtige Merkmale der Erfindung bei dem Antriebssystem sind, dass es einen Umrichter und einen über Versorgungsleitungen aus dem Umrichter gespeisten Motor aufweist,
wobei am Motor eine elektromagnetisch betätigbare Bremse angeordnet ist,
wobei die Bremse aus einem AC/DC-Wandler versorgbar und somit steuerbar ist,
welcher über Leitungen aus einem DC/AC-Wandler gespeist ist, welcher von einer Signalelektronik des Umrichters gespeist und/oder gesteuert wird
Von Vorteil ist dabei, dass die Bremsansteuerung weitgehend netzspannungsunabhängig ausführbar ist. Denn mittels des DC/AC-Wandlers ist auch bei netzseitigen Spannungsschwankungen eine Wechselspannung erzeugbar, die zur Ansteuerung der Bremse verwendbar ist. Vorzugsweise wird als Wechselspannung eine Niederspannung mit einer Frequenz zwischen 10 kHz und 1000 kHz verwendet.

Bei einer vorteilhaften Ausgestaltung sind die Leitungen und die Versorgungsleitungen in einem gemeinsamen Kabel angeordnet,
insbesondere wobei die Leitungen miteinander verdrillt sind. Von Vorteil ist dabei, dass Bei einer vorteilhaften Ausgestaltung umfasst die Signalelektronik des Umrichters ein Datenkopplungsmittel, mittels dessen Signale auf die Leitungen aufmodulierbar oder demodulierbar sind,
wobei der AC/DC-Wandler ein Datenkopplungsmittel aufweist, mittels dessen Signale auf die Leitungen aufmodulierbar oder demodulierbar sind, wobei das Datenkopplungsmittel des AC/DC-Wandlers mit einer Signalelektronik verbunden ist, die am Motor integriert angeordnet ist, insbesondere im Anschlusskasten des Motors integriert ist. Von Vorteil ist dabei, dass nicht nur die Versorgung der Bremse sondern auch die Übertragung der Bremsansteuerinformation mittels der Leitungen ausführbar ist.

Erfindungsgemäß ist ein STO-Detektor mit der im Motor integrierten Signalelektronik verbunden,
wobei der STO-Detektor die motorseitig an zumindest zwei der drei oder an den drei Versorgungsleitungen anliegende Spannungsverläufe überwacht,
so dass bei Leitungsbruch und/oder Fehler im Umrichter das Einfallen der Bremse bewirkbar ist. Von Vorteil ist dabei, dass bei Ausfall des vom Umrichter erzeugten Drehfeldes der STO-Detektor diesen Ausfall detektiert und die Bremse derart angesteuert wird, dass sie einfällt.

Bei einer vorteilhaften Ausgestaltung ist mit der am Motor integriert angeordneten Signalelektronik ein Rotorwinkelsensor und/oder eine Sensorvorrichtung, insbesondere umfassend Temperatursensor, Körperschallsensor und/oder Drehmomentsensor, angeordnet. Von Vorteil ist dabei, dass die Auswertung der Sensorsignale von einer Signalelektronik auswertbar ist, welche im Motor integriert ausführbar ist. Dabei ist mittels dieser Signalelektronik die Bremse abhängig von den Sensorsignalen ansteuerbar. In Weiterbildung sind sogar die Sensorsignale zum Umrichter weiterleitbar.

Weitere Vorteile ergeben sich aus den Unteransprüchen.

Die Erfindung wird nun anhand von Abbildungen näher erläutert:
In der Figur 1 ist ein Antriebssystem nach dem Stand der Technik schematisch skizziert, das einen Elektromotor 3 ohne Winkelerfassungssystem aufweist.
In der Figur 2 ist ein Antriebssystem außerhalb der Erfindung schematisch skizziert, wobei im Unterschied zur Figur 1 ein Rotorwinkelsensor 5 am Elektromotor 3 angeordnet ist..
In der Figur 3 ist ein erfindungsgemäßes Antriebssystem schematisch skizziert, wobei im Unterschied zur Figur 2 ein STO-Detektor vorgesehen ist.

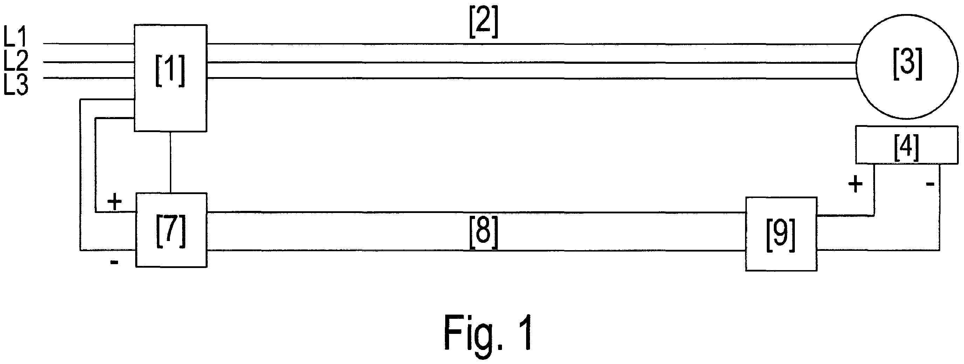

Wie in Figur 1 gezeigt, wird der Elektromotor 3 über ein Versorgungsleitungen aufweisendes Kabel 2 aus einem Umrichter 1, insbesondere aus einem spannungsgeführten Frequenzumrichter, versorgt.

Die Versorgungsleitungen sind als Drehstromleitungen ausgeführt, so dass der Umrichter 1 ausgangsseitig eine Drehspannung zur Verfügung stellt, welche den Motor 3 speist.

Der Umrichter ist aus den Netzphasen (L1, L2, L3) versorgt, wobei die Netzspannung gleichgerichtet wird und aus der so erzeugten unipolaren Spannung ein Wechselrichter versorgt wird. Der Wechselrichter weist drei Halbbrücken aus pulsweitenmoduliert angesteuerten Leistungshalbleiterschaltern zur Erzeugung des ausgangsseitigen, den Motor speisenden Drehspannungssystems auf.

Am Motor 3 ist eine elektromagnetisch betätigbare Bremse 4 angeordnet, mittels welcher die Rotorwelle des Motors 3 abbremsbar ist. Die Bremse 4 weist hierzu eine Spule auf, bei deren Bestromung eine Ankerscheibe zur Spule hin gezogen wird entgegen der von einem Federelement erzeugten Federkraft und die Bremse somit gelüftet.

Bei Nichtbestromung der Spule wird die Ankerscheibe von dem Federelement auf einen axial verschiebbaren, mit der Rotorwelle drehfest verbundenen Bremsbelagträger gedrückt, welcher auf eine Bremsfläche gedrückt wird.

Die Spule der Bremse 4 wird bei Bestromung aus dem DC-seitigen Ausgang eines AC/DC-Wandlers 9, insbesondere Gleichrichter, gespeist, dessen eingangsseitige Wechselspannung über Leitungen 8, insbesondere verdrillte Leitungen, aus einem DC/AC-Wandler 7 zur Verfügung gestellt wird.

Dieser DC/AC-Wandler 7 ist vorzugsweise im Umrichter 1 integriert ausgeführt, also im Gehäuse des Umrichters angeordnet und wird aus einer vom Umrichter erzeugten Gleichspannung gespeist.

Der DC/AC-Wandler 7 ist als vom Umrichter 1 gesteuerten Einspeiseeinheit ausgeführt, so dass die Bremse 4 ansteuerbar ist durch die Einspeiseeinheit. Abhängig von der somit vorhandenen oder nicht vorhandenen Wechselspannung am Ausgang des DC/AC-Wandlers 7 wird die Bremse gelüftet oder fällt ein.

Vorzugsweise werden die Leistungen 8 im Kabel 2 integriert. Dabei sind die Leitungen 8 als Niederspannungsleitungen ausgeführt und die Versorgungsleitungen als Mittelspannungsleitungen.

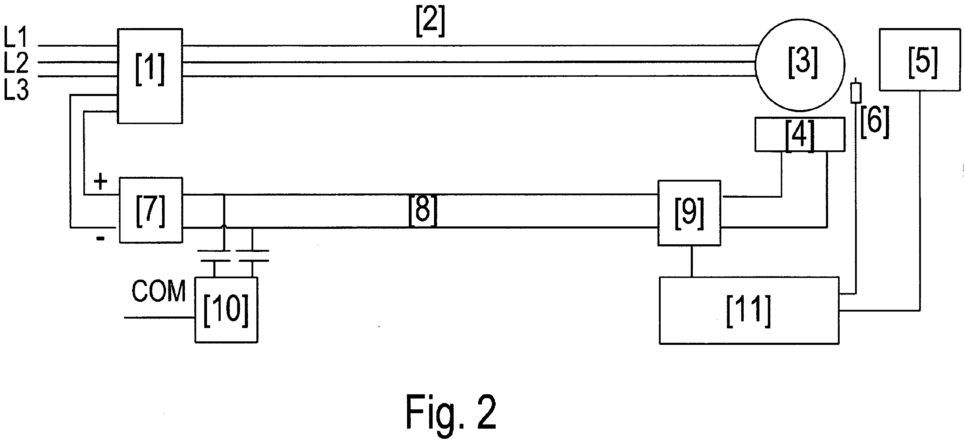

Wie bei dem Antriebssystem nach Figur 2 gezeigt, ist am Motor 3 zusätzlich ein Rotorwinkelsensor 5 angeordnet, mittels dessen die Winkellage der Rotorwelle des Motors 3 erfassbar ist. Außerdem ist eine weitere Sensorvorrichtung 6, insbesondere umfassend Temperatursensor, Körperschallsensor und/oder Drehmomentsensor, am Motor angeordnet, so dass auch Werte entsprechender, einer oder mehrerer physikalischer Größen erfassbar sind. Die weitere Sensorvorrichtung 6 und der Rotorwinkelsensor 5 sind mit einer Signalelektronik 11 verbunden, die aus dem AC/DC-Wandler 9 versorgt ist. Die Signalelektronik 11 überträgt Daten über die Leitungen 8, indem die Daten kapazitiv auf die Leitungen 8 im AC/DC-Wandler aufgekoppelt werden, so dass also im AC/DC-Wandler ein entsprechendes Koppelmittel integriert angeordnet ist. Umrichterseitig werden die Daten mittels Datenkoppelmittels 10 abgekoppelt und über ein Kommunikationsschnittstelle COM geleitet.

Das Bremsansteuersignal wird ebenfalls aufgekoppelt von dem Datenkoppelmittel 10 auf die Leitungen 8 übertragen an den AC/DC-Wandler 9, der die Speisespannung abhängig vom Bremsansteuersignal für die Spule der Bremse 4 zur Verfügung stellt.

Die über die Kommunikationsschnittstelle COM an den Umrichter 1 übertragenen Daten werden von der Signalelektronik des Umrichters 1 berücksichtigt und/oder weiterverarbeitet.

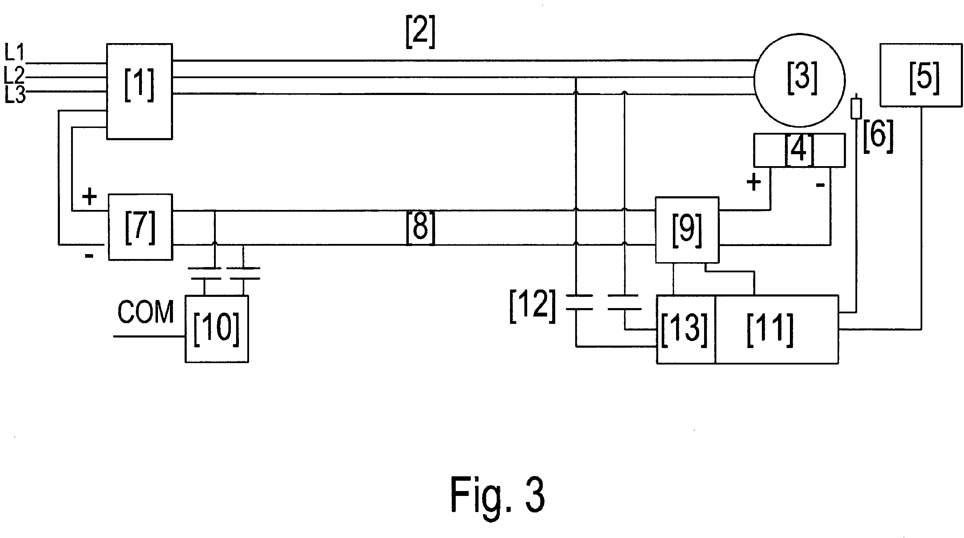

Wie bei dem Ausführungsbeispiel der Erfindung nach Figur 3 gezeigt, ist zusätzlich ein STO-Detektor 13 vorhanden, welcher die an den Versorgungsleitungen des Kabels 2 anliegende Drehspannung überwacht. Dabei werden entweder wie in Figur 3 gezeigt nur zwei der Phasenspannungen des Drehspannungssystems überwacht oder alternativ alle drei Phasenspannungen des Drehspannungssystems. Die Phasenspannungen werden kapazitiv erfasst, also mittels eines Kopplungsmittels 12 an den STO-Detektor übertragen. Somit ist bei konstanter Spannung oder verschwindender Spannung an der jeweiligen Phase keine Spannung detektierbar vom STO-Detektor 13. Wird also am Umrichter 1 ein STO Signal, also ein safe torque off Signal, ausgeführt, ist dies vom STO-Detektor 13 erkennbar und wird die Versorgungsspannung der Bremse 4 sicher abgeschaltet, indem der AC/DC-Wandler entsprechend abgeschaltet wird. Durch die Auswertung des Pulsmusters mittels des STO-Detektors 13 direkt am Motor 3 ergibt sich eine erhöhte Sicherheit, da auch im Normalbetrieb der Umrichter 1 und die Motorleitung überwacht sind und somit bei Leitungsbruch oder Fehlerzustand im Umrichter 1 die Bremse 4 derart vom STO-Detektor 13 über den AC/DC-Wandler angesteuert wird, dass die Bremse 4 einfällt.

Mittels des STO-Detektors 13 ist auch im Normalbetrieb die Motorspannung, also die ausgangsseitig erzeugte Spannung des Umrichters erfassbar.

Die Sicherheitsfunktion STO bezieht sich also auf ein sicheres Abschalten des Drehmomentes.

### Bezugszeichenliste

1 Umrichter, insbesondere spannungsgeführter Frequenzumrichter
2 Kabel, umfassend Versorgungsleitungen
3 Elektromotor
4 elektromagnetisch betätigbare Bremse
5 Rotorwinkelsensor
6 Sensorvorrichtung, insbesondere umfassend Temperatursensor, Körperschallsensor und/oder Drehmomentsensor
7 DC/AC-Wandler
8 Leitungen, insbesondere verdrillte Leitungen
9 AC/DC-Wandler, insbesondere Gleichrichter
10 Datenkopplungsmittel
11 Signalelektronik
12 Kopplungsmittel
13 STO-Detektor
L1 Netzphase
L2 Netzphase
L3 Netzphase

## Patentansprüche

1. Antriebssystem, aufweisend
- einen Umrichter (1)
- einen über drei Versorgungsleitungen (2) aus dem Umrichter (1) gespeisten Motor (3),
- eine elektromagnetisch betätigbare Bremse (4), die am Motor (3) angeordnet ist,
**dadurch gekennzeichnet, dass**
das Antriebssystem weiter aufweist:
- einen DC/AC-Wandler (7), der am oder im Umrichter (1) angeordnet ist, sowie einen AC/DC-Wandler (9), der am Motor (3) angeordnet ist,
wobei der DC/AC-Wandler (7) von einer Signalelektronik des Umrichters gespeist und/oder gesteuert wird,
der AC/DC-Wandler (9) über Leitungen (8) aus dem DC/AC-Wandler (7) gespeist wird,
und die Bremse (4) aus dem AC/DC-Wandler versorgt und damit gesteuert wird, und
- einen STO-Detektor (13) der mit einer im Motor (3) integrierten Signalelektronik (11) verbunden und dafür eingerichtet ist, den AC/DC-Wandler (9) zu steuern, und motorseitig an zumindest zwei der drei oder an den drei Versorgungsleitungen (2) anliegende Spannungsverläufe zu überwachen und bei Ausführung eines safe torque off Signals (STO) durch den Umrichter und/oder Leitungsbruch und/oder Fehler im Umrichter (1) durch Abschaltung des AC/DC-Wandlers (9) das Einfallen der Bremse (4) zu bewirken.

2. Antriebssystem nach Anspruch 1,
**dadurch gekennzeichnet, dass**
die Leitungen (8) und die Versorgungsleitungen (2) in einem gemeinsamen Kabel angeordnet sind,
insbesondere wobei die Leitungen (8) miteinander verdrillt sind.

3. Antriebssystem nach Anspruch 1 oder 2,
**dadurch gekennzeichnet, dass**
die Signalelektronik des Umrichters (1) ein erstes Datenkopplungsmittel (10) umfasst, mittels dessen Signale auf die Leitungen (8) aufmodulierbar oder demodulierbar sind,
wobei der AC/DC-Wandler (9) ein zweites Datenkopplungsmittel aufweist, mittels dessen Signale auf die Leitungen (8) aufmodulierbar oder demodulierbar sind, wobei das zweite Datenkopplungsmittel mit einer Signalelektronik (11) verbunden ist, die am Motor (3) integriert angeordnet ist, insbesondere im Anschlusskasten des Motors (3) integriert ist.

4. Antriebssystem nach Anspruch 1, 2, oder 3,
**dadurch gekennzeichnet, dass**
mit der am Motor (3) integriert angeordneten Signalelektronik (11) ein Rotorwinkelsensor (5) und/oder eine Sensorvorrichtung (6), insbesondere umfassend Temperatursensor, Körperschallsensor und/oder Drehmomentsensor, angeordnet ist.

## Claims

1. Drive system having
- a converter (1),
- a motor (3) fed from the converter (1) by means of three supply lines (2),
- an electromagnetically actuatable brake (4) arranged on the motor (3),
**characterised in that**
the drive system further has:
- a DC-to-AC converter (7) arranged on or in the converter (1), and an AC-to-DC converter (9) arranged on the motor (3),
the DC-to-AC converter (7) being fed and/or controlled by a signal electronics of the converter,
the AC-to-DC converter (9) being fed from the DC-to-AC converter (7) by means of lines (8),
and the brake (4) being powered, and thus controlled, from the AC-to-DC converter, and
- an STO detector (13) that is connected to a signal electronics (11) integrated in the motor (3) and is configured to control the AC-to-DC converter (9) and to monitor voltage curves applied on the motor side at least at two of the three, or at the three, supply lines (2), and to cause the brake (4) to apply, by switching off the AC-to-DC converter (9), when a Safe Torque Off signal (STO) is executed by the converter and/or in the event of a broken line and/or faults in the converter (1).

2. Drive system according to claim 1,
**characterised in that**
the lines (8) and the supply lines (2) are arranged in a common cable,
the lines (8) in particular being twisted together.

3. Drive system according to either claim 1 or claim 2,
**characterised in that**
the signal electronics of the converter (1) comprises a first data coupling means (10), by means of which signals can be modulated onto the lines (8) or demodulated,
the AC-to-DC converter (9) having a second data coupling means, by means of which signals can be modulated onto the lines (8) or demodulated, the second data coupling means being connected to a signal electronics (11) that is arranged in an integrated manner on the motor (3), in particular is integrated in the junction box of the motor (3).

4. Drive system according to claim 1, 2 or 3,
**characterised in that**
together with the signal electronics (11) arranged in an integrated manner on the motor (3), there is arranged a rotor-angle sensor (5) and/or a sensor device (6), in particular comprising a temperature sensor, a structure-borne noise sensor and/or a torque sensor.

## Revendications

1. Système d'entraînement comprenant
- un onduleur (1),
- un moteur (3), alimenté à partir dudit onduleur (1) par l'intermédiaire de trois conducteurs d'alimentation (2),
- un frein (4) actionnable électromagnétiquement, implanté sur ledit moteur (3),
**caractérisé par le fait que**
ledit système d'entraînement comporte, par ailleurs :
- un convertisseur (7) courant continu/courant alternatif, mis en place sur ou dans l'onduleur (1), ainsi qu'un convertisseur (9) courant alternatif/courant continu, mis en place sur le moteur (3),
le convertisseur (7) courant continu/courant alternatif étant alimenté et/ou commandé par une électronique de signalisation dudit onduleur,
le convertisseur (9) courant alternatif/courant continu étant alimenté à partir dudit convertisseur (7) courant continu/courant alternatif, par l'intermédiaire de conducteurs (8),
le frein (4) étant alimenté à partir dudit convertisseur courant alternatif/courant continu, par lequel il est commandé, et
- un détecteur STO (13), connecté à une électronique de signalisation (11) intégrée dans le moteur (3), et agencé de manière à commander le convertisseur (9) courant alternatif/courant continu ; à surveiller, côté moteur, des allures de tension appliquée à au moins deux parmi les trois, ou aux trois conducteurs d'alimentation (2) ; et à provoquer l'engagement du frein (4), par mise hors circuit dudit convertisseur (9) courant alternatif/courant continu, lors de l'exécution d'un signal *safe torque off* (STO) par l'onduleur et/ou lors d'une rupture de conducteur et/ou lors d'une défaillance dans ledit onduleur (1).

2. Système d'entraînement selon la revendication 1,
**caractérisé par le fait que**
les conducteurs (8) et les conducteurs d'alimentation (2) sont logés dans un câble commun,
lesdits conducteurs (8) étant notamment torsadés ensemble.

3. Système d'entraînement selon la revendication 1 ou 2,
**caractérisé par le fait que**
l'électronique de signalisation de l'onduleur (1) est pourvue d'un premier moyen (10) de couplage de données, à l'aide duquel des signaux peuvent être modulés ou démodulés sur les conducteurs (8),
le convertisseur (9) courant alternatif/courant continu étant doté d'un second moyen de couplage de données, à l'aide duquel des signaux peuvent être modulés ou démodulés sur lesdits conducteurs (8), lequel second moyen de couplage de données est connecté à une électronique de signalisation (11) implantée sur le moteur (3) de manière intégrée, notamment intégrée dans le boîtier de raccordement dudit moteur (3).

4. Système d'entraînement selon la revendication 1, 2 ou 3,
**caractérisé par le fait**
**qu'**un capteur (5) d'angles rotoriques et/ou un dispositif de détection (6), incluant notamment un capteur de températures, un capteur de bruits de structure et/ou un capteur de couples de rotation, est (sont) installé(s) avec l'électronique de signalisation (11) implantée sur le moteur (3) de manière intégrée.
